(19) Europäisches Patentamt
European Patent Office
Office européen des brevets

(11) EP 1 508 578 A1

(12) **EUROPEAN PATENT APPLICATION**
published in accordance with Art. 158(3) EPC

(43) Date of publication:
**23.02.2005 Bulletin 2005/08**

(21) Application number: **02728150.0**

(22) Date of filing: **24.05.2002**

(51) Int Cl.[7]: **C08F 8/36**, C08F 8/44, H01B 1/06, H01M 8/02, H01M 8/10

(86) International application number:
**PCT/JP2002/005081**

(87) International publication number:
**WO 2003/099881 (04.12.2003 Gazette 2003/49)**

(84) Designated Contracting States:
**AT BE CH CY DE DK ES FI FR GB GR IE IT LI LU MC NL PT SE TR**

(71) Applicant: **Sony Corporation**
**Tokyo 141-0001 (JP)**

(72) Inventors:
- **NISHIMOTO, Atsushi, c/o SONY CORPORATION Shinagawa-ku, Tokyo 141-0001 (JP)**
- **NODA, Kazuhiro, c/o SONY CORPORATION Shinagawa-ku, Tokyo 141-0001 (JP)**
- **ENOMOTO, Masashi, c/o SONY CORPORATION Shinagawa-ku, Tokyo 141-0001 (JP)**

(74) Representative: **Müller, Frithjof E., Dipl.-Ing.**
**Müller Hoffmann & Partner**
**Patentanwälte**
**Innere Wiener Strasse 17**
**81667 München (DE)**

(54) **ION-CONDUCTIVE POLYMER, SOLID POLYELECTROLYTE, AND CELL EMPLOYING THE SAME**

(57) The present invention relates to an ion conductive polymer which is expressed by a below-described chemical formula and has at least one or more kinds of stereospecific structures of a syndiotactic or isotactic structure.

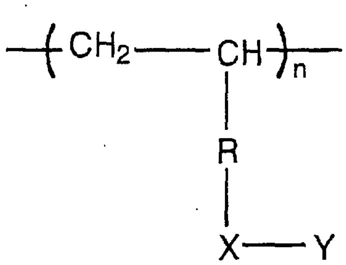

(In the above described formula, n designates an integer of 2 or more, R designates an organic residue having 1 to 20 carbon atoms or an organic residue having 1 to 20 carbon atoms and hetero atoms such as N, O, P, S, etc., X designates an anion part, and Y designates an alkali metal, an alkaline earth metal, a transition metal, a rare-earth element, an ammonium or a hydrogen.)

EP 1 508 578 A1

## Description

Technical Field

The present invention relates to a new ion conductive polymer and a solid polymer electrolyte including it and further to a battery using this solid polymer electrolyte.

Background Art

Nonaqueous electrolyte solution as a liquid electrolyte in which electrolyte salt is dissolved in a nonaqueous solvent has been hitherto employed as an ionic material to be used as an electrolyte for an energy device such as a secondary battery or a fuel cell. When the nonaqueous electrolyte solution is employed, the airtightness of a battery is assuredly maintained by using a metallic outer package vessel or the like so that the volatilization or the leakage of the nonaqueous electrolyte solution is prevented and the reliability of the battery is obtained.

As the ionic material which has no fear that the volatilization or the leakage of liquid is generated as in the case of the liquid electrolyte even when the airtightness of the battery is not ensured by the metallic outer package vessel, there has been proposed the use of a solid electrolyte obtained by solidifying an electrolyte.

As such kind of ionic material, there has been proposed by Gozdz et al., for instance, a gel polymer electrolyte obtained in such a manner that a copolymer of vinylidene fluoride and hexafluoro vinylidene is used as a matrix polymer and the copolymer is impregnated with nonaqueous electrolyte solution. The gel polymer electrolyte shows an ionic conductivity equivalent to that of the nonaqueous electrolyte solution, and is high in its mechanical strength and has an excellent film forming property.

In the gel polymer electrolyte, the dynamic strength depends on the matrix polymer. The ionic conductivity of the gel polymer electrolyte depends on the nonaqueous electrolyte solution with which the matrix polymer is impregnated. In order to improve the ionic conductivity of the gel polymer electrolyte, the amount of the nonaqueous electrolyte solution with which the matrix polymer is impregnated needs to be increased as much as possible. However, for instance, under an environment of high temperature, the liquid retention characteristics of the matrix polymer may be possibly deteriorated. Therefore, it is difficult to employ a battery using the gel polymer electrolyte under the environment of high temperature.

Further, Armand et al. propose a complex obtained by dissolving alkali metal salt such as lithium perchlorate in polyalkylene oxide polymer such as polyethylene oxide as a solid electrolyte. This complex has a relatively good ionic conductivity in a solid state. However, the ionic conductivity of this complex is insufficient as compared with the ionic conductivity of the nonaqueous electrolyte solution and the cation transport number of the complex is extremely low. Accordingly, the above-described complex has not been put to practical use as an electrolyte to be employed for an energy device.

An ionic conduction in the complex formed by dissolving the electrolyte salt in the matrix polymer is achieved in such a way that the polar group of the matrix polymer interacts with ions to generate ions serving as carriers in the amorphous layer of the matrix polymer and the movement of the ions is diffused and transferred along an electric field in the polymer in accordance with the molecular movement of the matrix polymer. At this time, cations and anions respectively move in opposite directions. The cations relatively strongly interacting with the polar group of the matrix polymer are coupled to the movement of the polymer, so that they move relatively slowly, however, the anions can move relatively fast in the polymer. As a result, the cation transport number is lowered.

Generally, electrodes used for a secondary battery are active to the cations. Accordingly, in the secondary battery using ordinary ionic conductors with an ionic conductivity to both the ions between a cathode and an anode which are active to the cations, the movement of the anions is interrupted by the cathode so that a concentration polarization may be possibly generated to lead to the fluctuation of voltage or output of the secondary battery.

Thus, an ionic conductor in which the anions do not move or the cation transport number is high is required.

As a method for enhancing the cation transport number of an ion conductive polymer, the fixing of the anions to the polymer has been known. For instance, as ionic materials having an anionic group fixed in the polymer and a proton conductivity, there have been known Nafion (produced by Dupont) including a perfluorosulfonate group or Flemion (produced by Dupont) including perfluorocarboxylate group, etc.

Further, Shriver et al. reports solid polymer electrolytes composed of sodium polystyrene sulfonate (Macromokecules, volume 17, P.975 (1984)) or composed of aluminum alkoxide including sodium counteracting the cations (Chem. Mater., volume 3, P. 418(1991)) as the ionic materials having the anionic group fixed to the polymer and a cation conductivity. Furthermore, DesMarteau et al. report a solid polymer electrolyte including sodium perfluorosulfonyl imide group (J. Fluorine Chem., 72, P.203 (1995)).

In the above-described proton conductive polymer, the method for synthesizing it is disadvantageously troublesome, its yield is low and a cost is high.

Further, in the above-described cation conductive polymers, the ionic conductivity is $1 \times 10^{-6}$ $Scm^{-1}$ or lower which is disadvantageously a very low value as compared with that of the ionic conductivity of an ordinary solid both ion conductive polymer electrolyte, more specifically, a value 1/100 times or lower as low as the above value. Accordingly, an electrolyte including the cation conductive polymer cannot be employed for the energy device such as the battery.

An ion conductive polymer having the high ionic conductivity and the cation transport number or the proton transport number has not been yet realized.

Disclosure of the Invention

The present invention is proposed on the basis of the above-described technical background and it is an object of the present invention to provide an ion conductive polymer having a high cation transport number or a proton transport number and a polymer electrolyte including it.

It is another object of the present invention to provide a battery having no fluctuation in voltage or output and having excellent load characteristics and a high output by using the polymer electrolyte.

An ion conductive polymer according to the present invention proposed in order to achieve the above-described objects is expressed by a below-described chemical formula (1) and has at least one or more kinds of stereospecific structures of syndiotactic or isotactic structure.

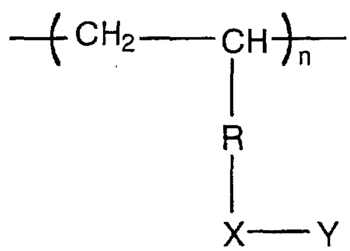

... (1)

(In the above described formula, n designates an integer of 2 or more, R designates an organic residue having 1 to 20 carbon atoms or an organic residue having 1 to 20 carbon atoms and hetero atoms such as N, O, P, S, etc., X designates an anion part, and Y designates an alkali metal, an alkaline earth metal, a transition metal, a rare-earth element, an ammonium or a hydrogen.)

Since an ionic group with the high degree of dissociation is stereospecifically introduced into a matrix polymer in the ionic conductive polymer according to the present invention constructed as mentioned above, ions can smoothly move in the ion conductive polymer. This ion conductive polymer has a high ionic conductivity and a high cation transport number.

Further, a solid polymer electrolyte according to the present invention includes an ion conductive polymer expressed by a below-described chemical formula (2) and having at least one or more kinds of stereospecific structures of a syndiotactic or isotactic structure.

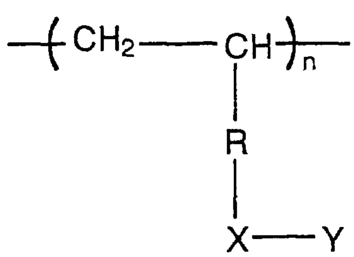

... (2)

(In the above described formula, n designates an integer of 2 or more, R designates an organic residue having 1 to 20 carbon atoms or an organic residue having 1 to 20 carbon atoms and hetero atoms such as N, O, P, S, etc., X designates an anion part, and Y designates an alkali metal, an alkaline earth metal, a transition metal, a rare-earth element, an ammonium or a hydrogen.)

The solid polymer electrolyte according to the present invention constructed as mentioned above includes the ion conductive polymer in which an ionic group with the high degree of dissociation is stereospecifically introduced into a matrix polymer and ions can smoothly move. Therefore, the solid polymer electrolyte has a high ionic conductivity and a high cation transport number.

Further, in a battery according to the present invention having a cathode, an anode and a solid polymer electrolyte, the solid polymer electrolyte includes an ion conductive polymer expressed by a below-described chemical formula (3) and having at least one or more kinds of stereospecific structures of a syndiotactic or isotactic structure.

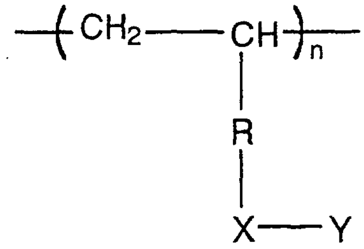

... (3)

(In the above described formula, n designates an integer of 2 or more, R designates an organic residue having 1 to 20 carbon atoms or an organic residue having 1 to 20 carbon atoms and hetero atoms such as N, O, P, S, etc., X designates an anion part, and Y designates an alkali metal, an alkaline earth metal, a transition metal, a rare-earth element, an ammonium or a hydrogen.)

The battery according to the present invention constructed as mentioned above includes the solid polymer electrolyte having the ion conductive polymer in which an ionic group with the high degree of dissociation is stereospecifically introduced into a matrix polymer and ions can smoothly move. Accordingly, the solid polymer electrolyte has a high ionic conductivity and a high cation transport number. Therefore, in the battery having the solid polymer electrolyte, the fluctuation of voltage or output is prevented and excellent load characteristics and a high output can be obtained.

Other objects of the present invention and specific advantages obtained by the present invention will be more apparent from the description of embodiments described below.

Best Mode for Carrying Out the Invention

Now, an ion conductive polymer and a solid polymer electrolyte and a battery using the solid polymer electrolyte to which the present invention is applied will be described.

The solid polymer electrolyte to which the present invention is applied includes an ion conductive polymer expressed by a below-described chemical formula (4) and having at least one or more kinds of stereospecific structures of a syndiotactic or isotactic structure.

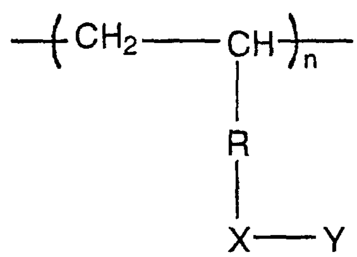

... (4)

(In the above described formula, n designates an integer of 2 or more, R designates an organic residue having 1 to 20 carbon atoms or an organic residue having 1 to 20 carbon atoms and hetero atoms such as N, O, P, S, etc., X designates an anion part, and Y designates an alkali metal, an alkaline earth metal, a transition metal, a rare-earth element, an ammonium or a hydrogen.)

An ionic group is irregularly included in a conventional cation conductive polymer. Therefore, ions cannot smoothly move in the cation conductive polymer, so that the ionic conductivity of the cation conductive polymer is low.

On the other hand, in the case of the ion conductive polymer to which the present invention is applied, an

ionic group having a high degree of dissociation is stereospecifically introduced into a matrix polymer so as to satisfy at least one or more kinds of stereospecific structures of a syndiotactic or isotactic structure, and accordingly, the ion conductive polymer according to the present invention has a crystalline property higher than that of a conventional ion conductive polymer. That is, the ion conductive polymer to which the present invention is applied has a structure that the ions can smoothly move in the polymer.

The ion conductive polymer and the solid polymer electrolyte including this ion conductive polymer to which the present invention is applied have high ionic conductivities and high cation transport numbers which cannot be realized by the conventional ion conductive polymer.

Assuming that a rate in which at least one or more kinds of stereospecific structures of a syndiotactic or isotactic structure are included in the entire structure of the ion conductive polymer is the content of the stereospecific structures, this content is obtained as 1 % or more in the mole ratio. Further, the content of the stereospecific structures is preferably 50 % or higher, and more preferably 90 % or higher. When the content of the stereospecific structures is lower than 1 % or lower in the mole ratio, a desired ionic conductivity or cation transport number may not be possibly achieved.

As anion parts in the ion conductive polymer, there are exemplified, for instance, a sulfonic acid anion, a carboxylate anion, a sulfonyl imide anion, a carbonyl imide anion, etc.

As precursors for obtaining the ion conductive polymer including the ionic group having the high degree of dissociation and a stereoregularity, there can be employed polystyrene, polyvinyl alcohol having the stereoregularity, etc.

The degree of polymerization of the precursors is not specifically limited, however, it is preferably located within a range of 10 to 106 and more preferably located within a range of 102 to 106.

Even when the solid polymer electrolyte is composed only of the ion conductive polymer expressed by the above-described chemical formula (4) and having at least one or more kinds of stereospecific structures of a syndiotactic or isotactic structure, the solid polymer electrolyte can completely perform functions as an electrolyte.

The solid polymer electrolyte may include electrolyte salt. As the electrolyte salts, there have been hitherto suitably selected and employed any of well-known lithium salts, alkali metal salts, etc. Specifically, there can be used one or the mixture of at least two or more kinds of lithium bis trifluoromethanesulfonate, lithium perchlorate, lithium tetrafluoroborate, etc.

Further, the solid polymer electrolyte may include the conventionally well-known ion conductive polymer in addition to the ion conductive polymer to which the present invention is applied.

The solid polymer electrolyte constructed as mentioned above and including the ion conductive polymer is employed as an electrolyte material of, for instance, a battery. The battery may be applied to either a primary battery or a secondary battery. In the case of the secondary battery, as a cathode material and an anode material, there may be exemplified below-described materials. However, any of conventionally well-known materials may be employed.

As the cathode materials, for instance, lithium-containing composite oxides may be used. As the anode materials, there may be employed, lithium metals, lithium alloys, carbon materials capable of being doped with lithium or dedoped from lithium, etc.

Now, the present invention is described in detail on the basis of specific experimental results.

[Synthesis of Ion Conductive Polymer]

Initially, syndiotactic polystyrene with the molecular weight of 1500000 of 5 g was weighed and agitated under the atmosphere of dry nitrogen at room temperature and dissolved in trichlorobenzene of 50 ml to prepare polymer solution. Then, thick sulfuric acid solution including $SO_3$ of 10 % was dropped to the polymer solution under the dry nitrogen at 70°C. After the dropping operation, the polymer solution was agitated for 7 hours at 70°C to prepare reaction solution.

Then, the reaction solution was dropped to ethanol of 500 ml to obtain white precipitate. This white precipitate was cleaned with ethanol until filtrate had ph of 7. After that, the obtained white precipitate was heated and dried under reduced pressure at 60°C to have a white solid as an organic polymer. The organic polymer was identified by $^1$H-NMR in FT-IR and $CDCl_3$ so that first syndiotactic polystyrene sulfuric acid was recognized.

Subsequently, the white solid was dissolved in methanol of 50 ml and the obtained solution was neutralized by using LiOH of 1M while paying attention to the rise of temperature. Then, a solvent was removed by drying it under reduced pressure at 70°C so that a white solid was produced to obtain syndiotactic polystyrene as the lithium salt.

[Production of Solid Polymer Electrolyte]

Initially, as an ion conductive polymer, the synthesized lithium syndiotactic polystyrene sulfonate of 0.5 g and polyethylene oxide with the average molecular weight of $10^5$ of 1 g were added to acetonitrile of 15 g, and then, the

obtained mixture was completely agitated to have homogeneous solution.

Then, a film type solid polymer electrolyte was obtained by a solvent cast method. Specifically, the solution was firstly supplied to a Petri dish made of Teflon and having a flat bottom surface. Then, a solvent was evaporated in a constant temperature bath whose temperature was set to a range of temperature of 40°C to 60°C under the atmosphere of nitrogen. After that, the solvent was completely removed by drying it under vacuum to have the film type solid polymer electrolyte.

The ionic conductivity of the solid polymer electrolyte obtained as described above and the transport number of lithium ions were measured as described below to evaluate the solid polymer electrolyte.

[Measurement of Ionic Conductivity]

Firstly, the solid polymer electrolyte film was stuck under pressure to a stainless steel electrode to use an obtained body as an evaluation cell. The cell was accommodated in the temperature constant bath the temperature of which was variable to recognize that the temperature of the cell was sufficiently steady. The electric conductivity was analytically obtained from a semicircular arc got by measuring a complex impedance (range of frequency: 5 to 13 MHz, AC amplitude voltage: 100 mV).

Ionic conductivity at each temperature is shown in Table 1.

[Table 1]

| Temperature (°C) | Ionic Conductivity ($Scm^{-1}$) |
|---|---|
| 80 | $1 \times 10^{-4}$ |
| 60 | $4 \times 10^{-5}$ |
| 40 | $6 \times 10^{-6}$ |
| 25 | $2 \times 10^{-6}$ |

Research workers recognized that the ionic conductivity in the conventional solid cation conductive polymer electrolyte was $1 \times 10^{-6}$ $Scm^{-1}$ or lower. It is understood from the Table 1 that the ionic conductivity of the solid polymer electrolyte produced by applying the present invention exceeds $1 \times 10^{-6}$ $Scm^{-1}$, and especially, under the atmosphere of high temperature such as 80°C, the solid polymer electrolyte has the ionic conductivity 100 times as high as the above-described ionic conductivity. Accordingly, it is understood that the solid polymer electrolyte to which the present invention is applied has an extremely excellent ionic conductivity.

[Measurement of Lithium Ion Transport Number (Cation Transport Number)]

The transport number of lithium ions was obtained by a method employing both a complex impedance measurement and a DC polarization measurement proposed by Vincent et al. More specifically, a cell formed by sandwiching a film type solid polymer electrolyte in between lithium metal electrodes was accommodated in a constant temperature bath at 60°C. After it was recognized that the temperature reaches constant temperature, the complex impedance was measured and an interface impedance (Ri) and a bulk impedance (Rb) were respectively obtained from a semicircle in a low frequency side and a semicircle in a high frequency side.

Then, DC voltage (V) of 10 mV was applied to the cell at 60°C to measure the DC polarization. The successive changes of current value were measured to obtain a current value I (∞) at a steady-state. Then, the calculation formula of a below-described formula (1) was substituted by these measured values to obtain the lithium ion transport number.

$$t_+ = \frac{R_b}{(V/I(\infty)-R_i)} \qquad (1)$$

The lithium ion transport number ($t_+$) of the obtained solid polymer electrolyte was 0.92. The research workers recognized that the lithium ion transport number in the conventional electrolyte was 0.1. Therefore, it is understood that the solid polymer electrolyte to which the present invention is applied has an extremely excellent cation transport number.

Industrial Applicability

The ion conductive polymer according to the present invention and the solid polymer electrolyte including it has the high ionic conductivity and the excellent cation transport number or proton transport number.

Since the battery according to the present invention employs the above-described solid polymer electrolyte, the battery has no fluctuation in voltage or output and has excellent load characteristics and a high output.

## Claims

1. An ion conductive polymer expressed by a below-described chemical formula and having at least one or more kinds of stereospecific structures of a syndiotactic or isotactic structure.

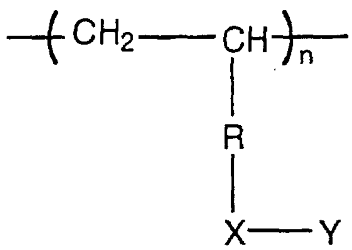

(In the above described formula, n designates an integer of 2 or more, R designates an organic residue having 1 to 20 carbon atoms or an organic residue having 1 to 20 carbon atoms and hetero atoms such as N, O, P, S, etc., X designates an anion part, and Y designates an alkali metal, an alkaline earth metal, a transition metal, a rare-earth element, an ammonium or a hydrogen.)

2. The ion conductive polymer according to claim 1, wherein the content of the stereospecific structure is 1 % or more in the mole ratio.

3. The ion conductive polymer according to claim 1, wherein an anion part is a sulfonic acid anion, a carboxylate anion, a sulfonyl imide anion, or a carbonyl imide anion.

4. A solid polymer electrolyte including an ion conductive polymer expressed by a below-described chemical formula and having at least one or more kinds of stereospecific structures of a syndiotactic or isotactic structure.

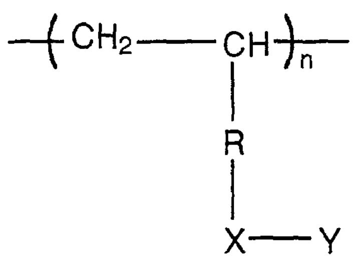

(In the above described formula, n designates an integer of 2 or more, R designates an organic residue having 1 to 20 carbon atoms or an organic residue having 1 to 20 carbon atoms and hetero atoms such as N, O, P, S, etc., X designates an anion part, and Y designates an alkali metal, an alkaline earth metal, a transition metal, a rare-earth element, an ammonium or a hydrogen.)

5. The solid polymer electrolyte according to claim 4, wherein the content of the stereospecific structure in the ion conductive polymer is 1 % or more in the mole ratio.

6. The solid polymer electrolyte according to claim 4, wherein an anion part in the ion conductive polymer is a sulfonic

acid anion, a carboxylate anion, a sulfonyl imide anion, or a carbonyl imide anion.

**7.** The solid polymer electrolyte according to claim 4, including electrolyte salt.

**8.** A battery having a cathode, an anode and a solid polymer electrolyte wherein the solid polymer electrolyte includes an ion conductive polymer expressed by a below-described chemical formula and having at least one or more kinds of stereospecific structures of a syndiotactic or isotactic structure.

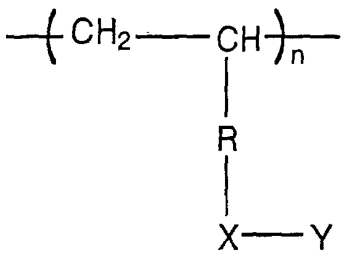

(In the above described formula, n designates an integer of 2 or more, R designates an organic residue having 1 to 20 carbon atoms or an organic residue having 1 to 20 carbon atoms and hetero atoms such as N, O, P, S, etc., X designates an anion part, and Y designates an alkali metal, an alkaline earth metal, a transition metal, a rare-earth element, an ammonium or a hydrogen.)

**9.** The battery according to claim 8, wherein the content of the stereospecific structure in the ion conductive polymer is 1 % or more in the mole ratio.

**10.** The battery according to claim 8, wherein an anion part in the ion conductive polymer is a sulfonic acid anion, a carboxylate anion, a sulfonyl imide anion, or a carbonyl imide anion.

**11.** The battery according to claim 8, wherein the solid polymer electrolyte includes electrolyte salt.

## INTERNATIONAL SEARCH REPORT

International application No.
PCT/JP02/05081

**A. CLASSIFICATION OF SUBJECT MATTER**
Int.Cl$^7$ C08F8/36, 8/44, H01B1/06, H01M8/02, 8/10

According to International Patent Classification (IPC) or to both national classification and IPC

**B. FIELDS SEARCHED**

Minimum documentation searched (classification system followed by classification symbols)
Int.Cl$^7$ C08F8/36, 8/44, H01B1/06, H01M8/02, 8/10

Documentation searched other than minimum documentation to the extent that such documents are included in the fields searched

Electronic data base consulted during the international search (name of data base and, where practicable, search terms used)
WPI(L)

**C. DOCUMENTS CONSIDERED TO BE RELEVANT**

| Category* | Citation of document, with indication, where appropriate, of the relevant passages | Relevant to claim No. |
|---|---|---|
| X | JP 52-96748 A (Rohm and Haas Co.),<br>13 August, 1977 (13.08.77),<br>Claims; page 7, lower left column, lines 11 to 12<br>& GB 1576016 A & FR 2340330 A<br>& DE 2704329 A | 1-3 |
| E,X | JP 2002-208310 A (Sony Corp.),<br>26 July, 2002 (26.07.02),<br>Full text<br>(Family: none) | 1-11 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 August, 2002 (13.08.02) | 27 August, 2002 (27.08.02) |
| Name and mailing address of the ISA/<br>Japanese Patent Office | Authorized officer |
| Facsimile No. | Telephone No. |

Form PCT/ISA/210 (second sheet) (July 1998)